# EUROPÄISCHE PATENTSCHRIFT

(11) **EP 2 890 905 B1**
(45) Veröffentlichungstag und Bekanntmachung des Hinweises auf die Patenterteilung: **24.05.2017**
(21) Anmeldenummer: 13749989.3
(22) Anmeldetag: 10.08.2013
(51) Int. Cl.: F16B 11/00, F16B 37/04

(54) **VERFAHREN ZUR HERSTELLUNG EINER VERBINDUNG ZWISCHEN ZWEI BAUTEILEN, INSBESONDERE KFZ-BAUTEILEN, SOWIE VERBINDUNGSELEMENT**
METHOD FOR PRODUCING A CONNECTION BETWEEN TWO COMPONENTS, IN PARTICULAR MOTOR VEHICLE COMPONENTS, AND CONNECTION ELEMENT
PROCÉDÉ D'ÉTABLISSEMENT D'UNE LIAISON ENTRE DEUX PIÈCES, EN PARTICULIER DES PIÈCES DE VÉHICULE AUTOMOBILE, ET ÉLÉMENT DE LIAISON

(30) Priorität: 29.08.2012 DE 102012107944
(43) Veröffentlichungstag der Anmeldung: 08.07.2015
(73) Patentinhaber: REHAU AG + Co, 95111 Rehau (DE)
(72) Erfinder: THÜMLER, Matthias, 95030 Hof (DE); HÖLZEL, Markus, 95234 Sparneck (DE); GRIMMLER, Achim, 95176 Konradsreuth/Ot Ahornberg (DE)
(86) Internationale Anmeldenummer: PCT/EP2013/002406
(87) Internationale Veröffentlichungsnummer: WO 2014/032765

(56) Entgegenhaltungen:
- EP-A1- 2 154 384
- WO-A1-2010/057881
- DE-A1- 4 402 550
- DE-A1- 10 007 245
- DE-U1-202009 000 057

## Beschreibung

Die Erfindung betrifft ein Verfahren zur Herstellung einer Verbindung zwischen zwei Bauteilen, insbesondere Kfz-Bauteilen, vorzugsweise aus Kunststoff.

Für die Verbindung von Kunststoff-Außenanbauteilen an Kraftfahrzeugen, wie z.B. Heckspoiler, Radlaufblenden, Türunterkanten oder auch Stoßfänger, werden sehr häufig zweischalige Bauteilkonzepte realisiert. Dies hängt damit zusammen, dass ein direktes Anspritzen von Verbindungselementen an die Außenschale zu ungewünschten Abzeichnungen auf der lackierten Außenseite führt. Durch das zweischalige Bauteilkonzept entfällt das Erfordernis, an der Außenschale die Verbindungselemente, wie z. B. Gewindebolzen, Pins, Clipse, Gewindemuttern etc., anzubringen. Die beschriebene Vorgehensweise führt zwar zu optisch einwandfreien Außenanbauteilen, ist jedoch konstruktiv aufwändig.

Aus dem Stand der Technik ist es bekannt, zur Befestigung eines Verbindungselements an einem Bauteil zunächst einen durch UV-Bestrahlung aushärtbaren Klebstoff auf dem Bauteil aufzutragen und danach ein das Verbindungsmittel tragendes Befestigungselement auf die mit Klebstoff beschichtete Oberfläche aufzusetzen. Das Verbindungselement wird auf der Oberfläche an der gewünschten Stelle positioniert und zumeist festgespannt. Das Befestigungselement ist ggü. UV-Licht transparent, so dass durch eine anschließende UV-Bestrahlung des Befestigungselements eine Aushärtung des Klebstoffs und damit eine Anbindung des Verbindungselements an das Bauteil sichergestellt sind. Durch das beschriebene Verfahren ist es möglich, die Positionierung des Verbindungselements unabhängig von der Aushärtungsgeschwindigkeit des Klebstoffes vorzunehmen, da die Aushärtung erst durch die UV-Bestrahlung in Gang gesetzt wird. Nachteilig bei diesem Verfahren ist allerdings die Erfordernis eines ggü. UV-Licht transparenten Werkstoffes für das Befestigungselement, wodurch sich vergleichsweise hohe Materialkosten ergeben sowie das Erfordernis der UV-Bestrahlung selbst.

Die DE 20 2009 000 057 U1 beschreibt ein Montagesystem zur Anbringung von Halterungselementen an einem Untergrund. Hierbei wird in die Bohrung eines Grundkörper unterseitig eine Sechskantschraube eingeführt und nach dem Aufsetzen des Grundkörpers auf den Untergrund der hierbei gebildete Hohlraum mit Klebstoff aufgefüllt. Die EP 2 154 384 A1 beschreibt ebenfalls ein Befestigungselement zur Anbringung von Gegenständen an einer Fläche mittels Klebstoff.

Aus der WO 2010/057881 A1 ist ein Punktbefestiger für eine Befestigungsfläche eines Bauteils bekannt. Zur Montage wird in einen Spalt zwischen Punktbefestiger und Befestigungsfläche Klebstoff eingebracht.

In der DE 100 07 245 A1 ist eine Anordnung zum Kuppeln eines Gewindeelementes mit einem Kunststoffteil eines Kraftfahrzeuges offenbart, bei der das Gewindeelement gegen Relativdrehung zu sichern ist.

Der Erfindung liegt die Aufgabe zugrunde, ein Verfahren zur Herstellung einer Verbindung zwischen zwei Bauteilen anzugeben, welches kostengünstig, einfach und schnell durchführbar ist und bei dem die Bildung von Abzeichnungen vermieden wird.

Die Aufgabe wird erfindungsgemäß gelöst durch ein Verfahren zur Herstellung einer Verbindung zwischen zwei Bauteilen, insbesondere Kfz-Bauteilen, vorzugsweise aus Kunststoff, gemäß Patentanspruch 1.

Die erfindungsgemäße Lehre beruht auf der Erkenntnis, dass im Gegensatz zum im Stand der Technik bekannten, eingangs beschreibenen Verfahren zunächst eine Positionierung des Verbindungselements auf der Oberfläche des Bauteils erfolgt und erst danach der Klebstoff appliziert wird. Dies hat zur Folge, dass das genaue Positionieren des Verbindungselements ohne Abhängigkeiten hinsichtlich der Aushärtungsgeschwindigkeit des Kunststoffes vollzogen werden kann. Folglich ist es mit der erfindungsgemäßen Lehre möglich, ein exaktes Positionieren des Verbindungselements am Bauteil durchzuführen, ohne dass danach eine separate Aktivierung des Klebstoffs (z.B. durch UV-Bestrahlung) erforderlich ist. Vielmehr ist ein sofortiges Reagieren des Klebstoffes unmittelbar nach dessen Applikation sogar gewünscht, da die Positionierung des Verbindungselements ja bereits im Vorfeld vorgenommen wurde. Hieraus ergibt sich ein wesentlich breiteres Spektrum hinsichtlich der anwendbaren Klebstoffe. Gemäß der erfindungsgemäßen Lehre können beispielsweise hochreaktive 2-Komponenten-Klebstoffe eingesetzt werden, welche unmittelbar nach der Einfüllung in den Hohlraum reagieren und aushärten können. Im Rahmen der Erfindung liegt es insbesondere, Klebstoffe einzusetzen, welche innerhalb von wenigen Minuten, z. B. weniger als 2 Minuten, vollständig aushärten. Geeignet sind beispielsweise schnell vernetzende Klebstoffe, wie sie z. B. von der Fa. nolax^{®} angeboten werden. Das Erfordernis der UV-Aktivierbarkeit des Klebstoffs besteht erfindungsgemäß nicht mehr. Ein weiterer großer Vorteil der Erfindung ist es, dass kein ggü. UV-Licht (oder eine andere Strahlung, z.B. Laserlicht) durchlässiger Werkstoff als Material für das Verbindungselement mehr erforderlich ist, sondern dieses aus einem "normalen" Kunststoff, z.B. PP, gefertigt werden kann. Mittels der erfindungsgemäßen Lehre ist es möglich, auf die eingangs beschriebenen zweischaligen Bauteilkonzepte zu verzichten, da die Anordnung des Verbindungselements ohne die Gefahr des Entstehens von Abzeichnungen an der äußeren Oberfläche des Bauteils möglich ist.

Zweckmäßigerweise wird der Hohlraum vom Klebstoff zumindest im Wesentlichen vollständig ausgefüllt. Insbesondere liegt eine vollständige Ausfüllung des Hohlraums mit dem Klebstoff im Rahmen der Erfindung. Hierdurch ist sichergestellt, dass die dem Bauteil zugewandte innere Oberfläche des Verbindungselements und auch die entsprechende Oberfläche des Bauteils, welche gemeinsam den Hohlraum begrenzen, vollständig mit Klebstoff benetzt werden, so dass eine optimale Anbindung des Verbindungselements an das Bauteil gewährleistet ist.

Das Verbindungsmittel kann eine lösbare Verbindung bereitstellen und hierbei vorzugsweise mindestens einen Gewindebolzen oder mindestens eine Gewindemutter aufweisen. Im Rahmen der Erfindung liegt es auch, dass das Verbindungsmittel mindestens einen Verbindungs-Clip für eine Rastverbindung und / oder mindestens einen Verbindungs-Pin aufweist.

Gemäß einer bevorzugten Ausführungsform der Erfindung weist die Wandung des Verbindungselements, vorzugsweise in dem der Oberfläche des ersten Bauteils abgewandten oberen Bereich, zusätzlich mindestens eine Austrittsöffnung auf, durch die überschüssiger Klebstoff aus dem Hohlraum austritt. Durch diese Maßnahme ist gewährleistet, dass die Befüllung des Hohlraums mit dem Klebstoff erst nach einer vollständigen Klebstoffausfüllung des Hohlraums beendet wird und entsprechend eine optimale Anbindung des Verbindungselements an das Bauteil gewährleistet ist.

Das Verbindungselement ist erfindungsgemäß mehrteilig ausgebildet, wobei das Verbindungsmittel vor dem Aufsetzen des Verbindungselements auf dem Bauteil mit einem den Hohlraum bildenden Befestigungselement des Verbindungselements verbunden wird. So kann das Verbindungsmittel zur Herstellung der Verbindung mit dem Befestigungselement beispielsweise durch eine Verbindungsöffnung in der Wandung des Befestigungselements hindurchgesteckt und an der Innenseite der Wandung zum Anschlag gebracht werden. Erfindungsgemäß weist das Verbindungsmittel eine Verbindungsplatte auf, die mit mindestens einer am Befestigungselement angeordneten Rastnase verrastet. Die Verbindungsplatte, welche zweckmäßigerweise rechteckig, vorzugsweise quadratisch, ausgebildet ist, bildet dann den Anschlag an der Innenseite der die Verbindungsöffnung umgebenden Wandung des Befestigungselements. Ferner ist erfindungsgemäß die mindestens eine Rastnase Bestandteil eines am Befestigungselement angespritzten Rastrahmens, der an die Kontur der Verbindungsplatte angepasst ist.

Das Verbindungselement selbst kann aus Kunststoff und / oder Metall bestehen. Im Rahmen der Erfindung liegt es insbesondere, dass das Verbindungsmittel aus Metall gefertigt wird, während das Befestigungselement aus einem Kunststoff-Spritzgussteil besteht. Zweckmäßigerweise weist das Befestigungselement eine kreisförmige Grundfläche auf, welche die vom Befestigungselement abgedeckte Oberfläche des Bauteils definiert.

Im Rahmen der Erfindung liegt es auch, dass die Oberfläche des ersten Bauteils im Positionierbereich des Verbindungselements vorbehandelt wird, um die Anbindung des Klebstoffes an die Oberfläche zu verbessern. Die Vorbehandlung kann beispielsweise mittels eines Plasma-Verfahrens, einer Primerung und/oder einer Beflammung erfolgen.

Gegenstand der Erfindung ist ferner ein Verbindungselement gemäß den Ansprüchen 9 und 10 sowie eine Bauteilanordnung gemäß Anspruch 11.

Im Folgenden wird die Erfindung anhand einer lediglich ein Ausführungsbeispiel darstellenden Zeichnung ausführlich erläutert. Es zeigen schematisch:
- Fig. 1: eine Explosionsdarstellung einer erfindungsgemäßen Bauteilanordnung vor der Montage,
- Fig. 2: die in Fig. 1 dargestellte Bauteilanordnung in einer dreidimensionalen Darstellung nach der Positionierung des Verbindungselements und
- Fig. 3: die fertig hergestellte Bauteilanordnung gemäß Figuren 1 und 2.

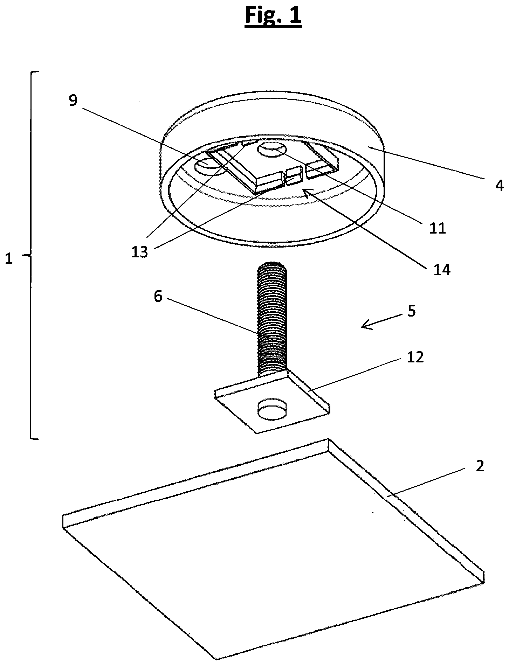

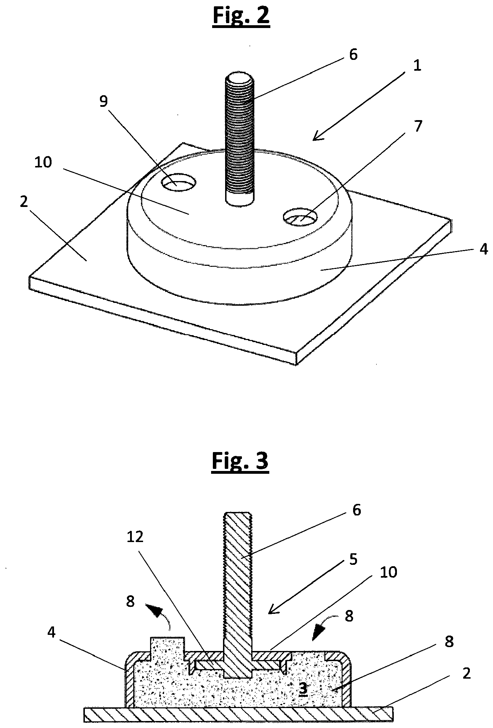

Die Figuren 1 bis 3 zeigen ein Verbindungselement 1 zur Herstellung einer Verbindung zwischen zwei Kfz-Bauteilen. Von diesen Bauteilen ist nur das erste Bauteil 2 vereinfacht als Platte dargestellt, an dem das Verbindungselement 1 befestigt wird. Das Verbindungselement 1 weist ein einen inneren Hohlraum 3 (vgl. Fig. 3) definierendes Befestigungselement 4 und ein Verbindungsmittel 5 zur Verbindung der beiden Kfz-Bauteile auf. Das Verbindungsmittel 5 stellt im Ausführungsbeispiel eine lösbare Verbindung bereit und besitzt einen Gewindebolzen 6. Die Wandung des Befestigungselements 4 weist eine Befüllöffnung 7 zur Befüllung des Hohlraums 3 mit Klebstoff 8 und zusätzlich eine Austrittsöffnung 9 für den Austritt von überschüssigem Klebstoff 8 aus dem Hohlraum 3 auf. Wie insbesondere den Figuren 2 und 3 zu entnehmen ist, sind sowohl die Austrittsöffnung 9 als auch die Befüllöffnung 7 an der dem Verbindungsmittel 5 zugewandten Oberseite 10 des Befestigungselements 4 vorgesehen. Zur Vormontage des mehrteiligen Verbindungselements 1 wird zunächst vor dem Aufsetzen des Verbindungselements 1 auf dem ersten Bauteil 2 das Verbindungsmittel 5 mit dem den Hohlraum 3 bildenden Befestigungselement 4 des Verbindungselements 1 verbunden. Zur Herstellung der Verbindung wird der Gewindebolzen 6 durch eine Verbindungsöffnung 11 in der Wandung des Befestigungselements 4 hindurchgesteckt und das Verbindungsmittel 5 wird an der Innenseite der Wandung zum Anschlag gebracht. Hierzu weist das Verbindungsmittel 5 eine Verbindungsplatte 12 auf, die mit zwei am Befestigungselement 4 angeordneten Rastnasen 13 verrastet. Folglich sind die Rastnasen 13 an der dem Hohlraum 3 zugewandten Innenseite des Befestigungselements 4 angeordnet. Das Befestigungselement 4 besteht aus einem einstückigen Kunststoff-Spritzgussteil. Die Verbindungsplatte 12 ist quadratisch ausgebildet. Die Rastnasen 13 sind Bestandteil eines an das Befestigungselement 4 angespritzten Rastrahmens 14, der an die Kontur der Verbindungsplatte 12 angepasst ist.

Vor dem Aufsetzen und Positionieren des Verbindungselements 1 auf der Oberfläche des ersten Bauteils 2 erfolgt zunächst eine Vorbehandlung der entsprechenden Oberfläche. Diese Vorbehandlung kann beispielsweise mittels eines Plasma-Verfahrens, einer Primerung oder einem Beflammen erfolgen.

Die eigentliche Anbindung des Verbindungselements 1 an das erste Bauteil 2 erfolgt nun wie folgt: Nach der Vormontage des Verbindungselements 1, wie zuvor beschrieben, und der Vorbehandlung der Oberfläche des ersten Bauteils 2 wird zunächst das das Verbindungsmittel 5 aufweisende Verbindungselement 1 auf der Oberfläche des ersten Bauteils 2 aufgesetzt und positioniert. Hierdurch bildet das Verbindungselement 1 nach dem Aufsetzen gemeinsam mit dem ersten Bauteil 2 den inneren Hohlraum 3. Die Positionierung des Verbindungselements 1 auf dem Bauteil 2 kann beispielsweise durch ein Festspannen des Verbindungselements 1 mittels einer (nicht dargestellten) Spannvorrichtung erfolgen. Danach wird durch die Befüllöffnung 7 in der Wandung des Befestigungselements 4 Klebstoff 8 in den Hohlraum 3 eingefüllt, so dass der Klebstoff 8 eine stoffschlüssige Verbindung zwischen dem Verbindungselement 1 und dem ersten Bauteil 2 herstellt. Hierdurch wird das Verbindungsmittel 5 am ersten Bauteil 2 befestigt und steht damit zur Herstellung der Verbindung mit dem zweiten (nicht dargestellten) Bauteil zur Verfügung. Wie der Fig. 3 zu entnehmen ist, wird der Hohlraum 3 vom Klebstoff 8 vollständig ausgefüllt. Zur Sicherstellung der vollständigen Ausfüllung weist die Wandung des Befestigungselements 4 in dem der Oberfläche des Bauteils 2 abgewandten oberen Bereich eine Austrittsöffnung 9 auf, durch die überschüssiger Klebstoff 8 aus dem Hohlraum 3 austritt. Es wird folglich solange Klebstoff 3 in den Hohlraum 8 eingefüllt, bis ein vollständiges Ausfüllen des Hohlraums 8 mit Klebstoff 3 durch den Austritt von überschüssigem Klebstoff 3 aus der Austrittsöffnung 9 angezeigt wird. Als Klebstoff 3 können hochreaktive 2-Komponenten-Klebstoffe eingesetzt werden, wodurch der Einsatz von herkömmlichen Klebstoffen jedoch nicht ausgeschlossen wird. Nach Aushärtung des Klebstoffes 3 kann die Spannvorrichtung gelöst werden und die fertige Bauteilanordnung steht zur Verbindung mit dem zweiten Bauteil zur Verfügung.

Nach Herstellung der Anbindung des Verbindungsmittels 5 an das erste Bauteil 2 steht der Gewindebolzen 6 zur Verbindung des ersten Bauteils 2 mit dem zweiten, nicht dargestellten Bauteil zur Verfügung. Als Bauteilanordnungen, welche gemäß der erfindungsgemäßen Lehre hergestellt werden, kommen insbesondere Kfz-Außenanbauteile aus Kunststoff in Frage, wie z. B. Heckspoiler, Radlaufblenden, Türunterkanten oder aber auch Stoßfänger.

## Patentansprüche

1. Verfahren zur Herstellung einer Verbindung zwischen zwei Bauteilen, insbesondere Kfz-Bauteilen, vorzugsweise aus Kunststoff,
- wobei zunächst auf eine Oberfläche des ersten Bauteils (2) ein mindestens ein Verbindungsmittel (5) aufweisendes Verbindungselement (1) zur Verbindung der beiden Bauteile aufgesetzt und positioniert wird,
- wobei das Verbindungselement (1) mehrteilig ausgebildet ist und das Verbindungsmittel (5) vor dem Aufsetzen des Verbindungselements (1) auf dem ersten Bauteil (2) mit einem aus einem einstückigen Kunststoff-Spritzgussteil bestehenden Befestigungselement (4) des Verbindungselements (1) verbunden wird,
- wobei das Verbindungsmittel (5) eine Verbindungsplatte (12) aufweist, die mit mindestens einer am Befestigungselement (4) angeordneten Rastnase (13) verrastet,
- wobei die mindestens eine Rastnase (13) Bestandteil eines an das Befestigungselement (4) angespritzten Rastrahmens (14) ist, der an die Kontur der Verbindungsplatte (12) angepasst ist,
- wobei das Befestigungselement (4) nach dem Aufsetzen gemeinsam mit dem ersten Bauteil (2) einen inneren Hohlraum (3) bildet,
- wobei danach durch mindestens eine Befüllöffnung (7) in der Wandung des Verbindungselements (1) ein Klebstoff (8) in den Hohlraum (3) eingefüllt wird, welcher eine stoffschlüssige Verbindung zwischen dem Verbindungselement (1) und dem ersten Bauteil (2) herstellt, so dass hierdurch das Verbindungsmittel (5) am ersten Bauteil (2) befestigt wird und damit zur Herstellung der Verbindung mit dem zweiten Bauteil zur Verfügung steht.

2. Verfahren nach Anspruch 1, **dadurch gekennzeichnet, dass** der Hohlraum (3) vom Klebstoff (8) zumindest im wesentlichen vollständig ausgefüllt wird.

3. Verfahren nach Anspruch 1 oder 2, **dadurch gekennzeichnet, dass** das Verbindungsmittel (5) eine lösbare Verbindung bereitstellt und vorzugsweise mindestens einen Gewindebolzen (6) oder mindestens eine Gewindemutter aufweist.

4. Verfahren nach Anspruch 1 oder 2, **dadurch gekennzeichnet, dass** das Verbindungsmittel (5) mindestens einen Verbindungs-Clip und / oder Verbindungs-Pin aufweist.

5. Verfahren nach einem der Ansprüche 1 bis 4, **dadurch gekennzeichnet, dass** die Wandung des Verbindungselements (1), vorzugsweise in dem der Oberfläche des ersten Bauteils (2) abgewandten oberen Bereich, zusätzlich mindestens eine Austrittsöffnung (9) aufweist, durch die überschüssiger Klebstoff (8) aus dem Hohlraum (3) austritt.

6. Verfahren nach einem der Ansprüche 1 bis 5, **dadurch gekennzeichnet, dass** das Verbindungsmittel (5) zur Herstellung der Verbindung mit dem Befestigungselement (4) durch eine Verbindungsöffnung (11) in der Wandung des Befestigungselements (4) hindurchgesteckt und an der Innenseite der Wandung zum Anschlag gebracht wird.

7. Verfahren nach einem der Ansprüche 1 bis 6, **dadurch gekennzeichnet, dass** die Verbindungsplatte (12) rechteckig, vorzugsweise quadratisch, ausgebildet ist.

8. Verfahren nach einem der Ansprüche 1 bis 7, **dadurch gekennzeichnet, dass** die Oberfläche des ersten Bauteils (2) im Positionierbereich des Verbindungselements (1) vorbehandelt wird, um die Anbindung des Klebstoffs (3) an die Oberfläche zu verbessern.

9. Verbindungselement (1) zur Herstellung einer Verbindung zwischen zwei Bauteilen, insbesondere Kfz-Bauteilen, mit einem einen inneren Hohlraum (3) definierenden Befestigungselement (4) und mindestens einem Verbindungsmittel (5) zur Verbindung der beiden Bauteile, wobei die Wandung des Befestigungselements (4) mindestens eine Befüllöffnung (7) zur Befüllung des Hohlraums (3) mit Klebstoff (8) und mindestens eine Austrittsöffnung (9) für den Austritt von überschüssigem Klebstoff (8) aus dem Hohlraum (3) aufweist, wobei das Verbindungsmittel (1) mehrteilig ausgebildet ist, **dadurch gekennzeichnet, dass** das Verbindungsmittel (5) mit einem den Hohlraum (3) bildenden, aus einem einstückigen Kunststoff-Spritzgussteil bestehenden Befestigungselement (4) des Verbindungselements (1) verbunden ist, wobei das Verbindungsmittel (2) eine Verbindungsplatte (12) aufweist, die mit mindestens einer am Befestigungselement (4) angeordneten Rastnase (13) verrastet ist und wobei die mindestens eine Rastnase (13) Bestandteil eines an das Befestigungselement (4) angespritzten Rastrahmens (14) ist, der an die Kontur der Verbindungsplatte (12) angepasst ist.

10. Verbindungselement nach Anspruch 9, **dadurch gekennzeichnet, dass** die Austrittsöffnung (9) und vorzugsweise auch die Befüllöffnung (7) an der dem Verbindungsmittel (5) zugewandten Oberseite (10) des Befestigungselements (4) vorgesehen ist/sind.

11. Bauteilanordnung mit einem Bauteil, insbesondere einem Kfz-Bauteil, und mindestens einem Verbindungselement (1), das mit einem Verfahren nach einem der Ansprüche 1 bis 8 am Bauteil befestigt wurde.

## Claims

1. Method for producing a connection between two components, in particular motor vehicle components, preferably made of plastic,
- wherein a connection element (1) having at least one connection means (5) and intended for connecting the two components is first placed and positioned on a surface of the first component (2),
- wherein the connection element (1) is of multi-part design and, prior to the placement of the connection element (1) on the first component (2), the connection means (5) is connected to a fastening element (4), which consists of a one-piece plastic injection-moulded part, of the connection element (1),
- wherein the connection means (5) has a connection plate (12) which latches with at least one latching lug (13) arranged on the fastening element (4),
- wherein the at least one latching lug (13) is a constituent part of a latching frame (14) which is injection-moulded onto the fastening element (4) and which is adapted to the contour of the connection plate (12),
- wherein, after the placement, the fastening element (4) forms an inner cavity (3) together with the first component (2),
- wherein an adhesive (8) is subsequently introduced into the cavity (3) through at least one filling opening (7) in the wall of the connection element (1) and produces a cohesive connection between the connection element (1) and the first component (2), with the result that the connection means (5) is thereby fastened to the first component (2) and is thus available for producing the connection with the second component.

2. Method according to Claim 1, **characterized in that** the cavity (3) is at least substantially completely filled by the adhesive (8).

3. Method according to Claim 1 or 2, **characterized in that** the connection means (5) provides a releasable connection and preferably has at least one threaded bolt (6) or at least one threaded nut.

4. Method according to Claim 1 or 2, **characterized in that** the connection means (5) has at least one connection clip and/or connection pin.

5. Method according to one of Claims 1 to 4, **characterized in that** the wall of the connection element (1) additionally has, preferably in the upper region facing away from the surface of the first component (2), at least one outlet opening (9) through which excess adhesive (8) is let out of the cavity (3).

6. Method according to one of Claims 1 to 5, **characterized in that**, to produce the connection to the fastening element (4), the connection means (5) is plugged through a connection opening (11) in the wall of the fastening element (4) and brought into abutment against the inner side of the wall.

7. Method according to one of Claims 1 to 6, **characterized in that** the connection plate (12) is designed to be rectangular, preferably square.

8. Method according to one of Claims 1 to 7, **characterized in that** the surface of the first component (2) is pretreated in the positioning region of the connection element (1) in order to improve the attachment of the adhesive (3) to the surface.

9. Connection element (1) for producing a connection between two components, in particular motor vehicle components, comprising a fastening element (4), which defines an inner cavity (3), and at least one connection means (5) for connecting the two components, wherein the wall of the fastening element (4) has at least one filling opening (7) for filling the cavity (3) with an adhesive (8) and at least one outlet opening (9) to let excess adhesive (8) out of the cavity (3), wherein the connection means (1) is of multi-part design, **characterized in that** the connection means (5) is connected to a fastening element (4), which forms the cavity (3) and consists of a one-piece plastic injection-moulded part, of the connection element (1), wherein the connection means (2) has a connection plate (12) which is latched with at least one latching lug (13) arranged on the fastening element (4) and wherein the at least one latching lug (13) is a constituent part of a latching frame which is injection-moulded onto the fastening element (4) and which is adapted to the contour of the connection plate (12).

10. Connection element according to Claim 9, **characterized in that** the outlet opening (9) and preferably also the filling opening (7) is/are provided on the upper side (10) of the fastening element (4) that faces the connection means (5).

11. Component arrangement comprising a component, in particular a motor vehicle component, and at least one connection element (1) which has been fastened to the component by a method according to one of Claims 1 to 8.

## Revendications

1. Procédé d'établissement d'une liaison entre deux pièces, en particulier des pièces de véhicule automobile, de préférence en matière plastique,
- dans lequel on dépose et on positionne d'abord sur une surface de la première pièce (2) un élément de liaison (1) présentant au moins un moyen de liaison (5) pour la liaison des deux pièces,
- dans lequel l'élément de liaison (1) est réalisé en plusieurs parties et on assemble le moyen de liaison (5) avec un élément de fixation (4) de l'élément de liaison (1) constitué par une pièce moulée par injection en matière plastique en une seule pièce, avant le dépôt de l'élément de liaison (1) sur la première pièce (2),
- dans lequel le moyen de liaison (5) présente une plaque de liaison (12), qui se cale avec au moins un ergot d'encliquetage (13) disposé sur l'élément de fixation (4),
- dans lequel ledit au moins un ergot d'encliquetage (13) fait partie d'un cadre d'encliquetage (14) formé par projection sur l'élément de fixation (4), qui est adapté au contour de la plaque de liaison (12),
- dans lequel l'élément de fixation (4) forme après le dépôt une cavité interne (3) ensemble avec la première pièce (2),
- dans lequel on verse ensuite une colle (8) dans la cavité (3) à travers au moins une ouverture de remplissage (7) dans la paroi de l'élément de liaison (1), colle qui établit une liaison matérielle entre l'élément de liaison (1) et la première pièce (2), de telle manière que le moyen de liaison (5) soit ainsi fixé sur la première pièce (2) et soit ainsi disponible pour l'établissement de la liaison avec la deuxième pièce.

2. Procédé selon la revendication 1, **caractérisé en ce que** l'on remplit au moins essentiellement entièrement la cavité (3) avec la colle (8).

3. Procédé selon la revendication 1 ou 2, **caractérisé en ce que** le moyen de liaison (5) procure une liaison détachable et présente de préférence au moins une tige filetée (6) ou au moins un écrou fileté.

4. Procédé selon la revendication 1 ou 2, **caractérisé en ce que** le moyen de liaison (5) présente au moins une pince de liaison et/ou une broche de liaison.

5. Procédé selon l'une quelconque des revendications 1 à 4, **caractérisé en ce que** la paroi de l'élément de liaison (1) présente en outre, de préférence dans la région supérieure détournée de la surface de la première pièce (2), au moins une ouverture de sortie (9), par laquelle la colle excédentaire (8) sort de la cavité (3).

6. Procédé selon l'une quelconque des revendications 1 à 5, **caractérisé en ce que** le moyen de liaison (5) est percé par une ouverture de liaison (11) dans la paroi de l'élément de fixation (4) en vue de l'établissement de la liaison avec l'élément de fixation (4) et il est amené à butée contre le côté intérieur de la paroi.

7. Procédé selon l'une quelconque des revendications 1 à 6, **caractérisé en ce que** la plaque de liaison (12) est de forme rectangulaire, de préférence de forme carrée.

8. Procédé selon l'une quelconque des revendications 1 à 7, **caractérisé en ce que** la surface de la première pièce (2) est prétraitée dans la zone de positionnement de l'élément de liaison (1), afin d'améliorer l'accrochage de la colle (3) sur la surface.

9. Elément de liaison (1) pour l'établissement d'une liaison entre deux pièces, en particulier des pièces de véhicule automobile, avec un élément de fixation (4) définissant une cavité interne (3) et au moins un moyen de liaison (5) pour la liaison des deux pièces, dans lequel la paroi de l'élément de fixation (4) présente au moins une ouverture de remplissage (7) pour le remplissage de la cavité (3) avec de la colle (8) et au moins une ouverture de sortie (9) pour la sortie de la colle excédentaire (8) hors de la cavité (3), dans lequel le moyen de liaison (1) est réalisé en plusieurs parties, **caractérisé en ce que** le moyen de liaison (5) est assemblé avec un élément de fixation (4) de l'élément de liaison (1) formant la cavité (3) et constitué par une pièce moulée par injection en matière plastique d'une seule pièce, dans lequel le moyen de liaison (2) présente une plaque de liaison (12), qui se cale avec au moins un ergot d'encliquetage (13) disposé sur l'élément de fixation (4) et dans lequel ledit au moins un ergot d'encliquetage (13) fait partie d'un cadre d'encliquetage (14) formé par projection sur l'élément de fixation (4), qui est adapté au contour de la plaque de liaison (12).

10. Elément de liaison selon la revendication 9, **caractérisé en ce que** l'ouverture de sortie (9) et de préférence aussi l'ouverture de remplissage (7) est/sont prévue(s) sur le côté supérieur (10) de l'élément de fixation (4) tourné vers le moyen de liaison (5).

11. Agencement de pièces avec une pièce, en particulier une pièce pour véhicule automobile, et au moins un élément de liaison (1), qui a été fixé sur la pièce par un procédé selon l'une quelconque des revendications 1 à 8.
